# EUROPEAN PATENT APPLICATION

(11) **EP 1 993 248 A1**
(43) Date of publication of application: **19.11.2008**
(21) Application number: 07009866.0
(22) Date of filing: 16.05.2007
(51) Int. Cl.: H04L 27/26

(54) **Method for coding data and data coding device**

(71) Applicant: Nokia Siemens Networks Oy, 02610 Espoo (FI)
(72) Inventor: Costa, Elena Dr., 81739 München (DE); Frank, Tobias, 35305 Grünberg (DE); Klein, Anja Prof., 64287 Darmstadt (DE); Sohl, Anja, 64285 Darmstadt (DE)
(74) Representative: Bruglachner, Thomas E.

(57) **Abstract**

The invention relates to a Method for coding data to be transmitted in a transmitted signal, wherein the transmitted signal comprises multiple subcarriers with orthogonal or quasi-orthogonal frequencies, and wherein at least a subset of a number Q of subcarriers is assigned to a specific user, said method comprising the steps of:
- mapping (22) data symbols relating to the specific user onto at least a part of the elements of a vector with a number of at most Q,
- applying a unitary transform (24) to the vector (s) with the number of at most Q elements and
mapping (26) the elements of the transformed vector (S) to the subcarriers assigned to the specific user.
In order to achieve a low Peak-to-Average-Power-Ratio, it is proposed that pilot symbols (p) for performing a channel estimation are mapped (22) to a part of the elements of said vector with at most Q elements before applying said a unitary transform (24) to the vector with the number of Q elements.

## Description

### 1. Technical Field of the Invention

The invention relates to a method for coding data to be transmitted in a transmitted signal, wherein the transmitted signal comprises multiple subcarriers with orthogonal frequencies and to a data coding device for coding data to be transmitted in a transmitted signal.

### 2. Background of the Invention

For the uplink of third generation or fourth generation broadband mobile radio systems, orthogonal frequency division multiple access (OFDMA) schemes with unitary precoding are currently under investigation, since amongst other advantages, such data coding schemes provide a low Peak-to-Average-Power-Ratio (PAPR). In order to achieve a low Peak-to-Average-Power-Ratio, OFDMA signals are frequently precoded by applying a unitary precoding to a vector of a number Q of data symbols.

The precoded data stream is mapped to the correct subcarrier positions according to the respective subcarrier allocation scheme. Depending on the subcarrier allocation scheme applied, the data vectors related to different users are mapped on different subsets of subcarriers in a total number of N subcarriers of the transmitted signal.

The transmitted signal is obtained by applying an N-point Inverse Discrete Fourier Transform (IDFT) to the precoded and mapped data symbols, which is equivalent to an Orthogonal Frequency Division Multiple Access (OFDMA) modulation. The main advantage of the above scheme is that if the precoding is applied on the Q data symbols, a low Peak-to-Average-Power-Ratio (PAPR) for the transmitted signal in time domain is achieved.

Among the multiple types of orthogonal frequency division multiple access schemes, there is the Single Carrier Frequency Division Multiple Access (SC-FDMA) Scheme, where a simple Discrete Fourier Transform (DFT) is used as a unitary precoding. For SC-FDMA, there are different possibilities for the allocation of a certain set of subcarriers to the specific user under consideration. For example, a blockwise allocation leads to the Localized Frequency Division Multiple Access (LFDMA) scheme, whereas an interleaved allocation results in the Interleaved Frequency Division Multiple Access (IFDMA) scheme. As a third possibility of subcarrier allocation, it is known to spread blocks of subcarriers assigned to the specific user equidistantly over the total bandwidth, wherein each block consists of a number of K subcarriers. This leads to the so-called Block-IFDMA (B-IFDMA) scheme.

The time domain structure of Single Carrier Frequency Division Multiple Access signals in general includes the insertion of a guard interval in-between consecutive symbols. If a cyclic prefix is used as a guard interval, a low complexity Frequency Domain Equalization (FDE) can be applied, that utilizes a single channel transfer coefficient for the equalization of the data transmitted on a certain subcarrier.

To take advantage of the low complexity equalization, precise knowledge of the Channel State Information (CSI) is necessary. The Channel State Information is a coefficient or a matrix mapping the signal transmitted by a signal transmitter onto the signal received by a signal receiver in a simplified model of the channel behaviour. The total signal received is modelled as a sum of the signals mapped according to the Channel State Information and a noise component. In general, the Channel State Information is time- and frequency dependent. However, since the frequency dependency of the Channel State Information may be relatively weak if the maximum delay of the channel is small, the Channel State Information of neighbouring subcarriers may be obtained using interpolations. Such a channel estimation can be performed by transmitting pilot symbols that are known a priori at the receiver. In order to perform channel estimation in frequency domain, pilot symbols have to be located at certain subcarrier positions in order to get an estimate of the channel transfer factor at this position in frequency. Pilot and data symbols have to be multiplexed in some way.

In consideration of the sampling theorem in frequency domain, it is sufficient to estimate the channel at single subcarrier positions that have a maximum distance within the coherence bandwidth of the channel and to interpolate in-between the single estimates. The possibility of interpolation allows the transmission of pilot and data symbols at the same time, because only a fractional part of the resources is used for channel estimation and the remaining symbols may be used for transmitting data.

However, the transmission of pilot and data symbols at the same time leads to an increasing Peak-to-Average-Power-Ratio. This is disadvantageous, since a high Peak-to-Average-Power-Ratio necessitates over dimensioned amplifiers having a linear behaviour over the whole power spectrum covered by the signal. In order to allow the use of low cost amplifiers, a low Peak-to-Average-Power-Ratio is always desirable.

Furthermore, orthogonality between pilot symbols and data symbols has to be maintained. If it is not possible to separate the pilot symbols and the data symbols at the receiver, the quality of the channel estimation suffers due to non-orthogonality resulting in additional disturbances.

In the prior art, it has been proposed to transmit a weighted sum of pilot and data symbols in frequency domain on subcarriers whose channel transfer coefficients shall be estimated.

This implies that orthogonality between pilot symbols and data symbols can not be maintained.

In a second proposal, elements of the Discrete Fourier Transform of data symbols that are transmitted on certain equidistant subcarriers have been replaced by elements of the Discrete Fourier Transform of the pilot symbols. This means that pilot symbols and data symbols are kept orthogonal. However, for both proposals, the pilot symbols and the data symbols have been transmitted as separate Interleaved Frequency Division Multiple Access signals and therefore, both of the proposed kinds of multiplexing result in a high Peak-to-Average-Power-Ratio as compared to Single Carrier Frequency Domain Equalisation system without multiplexed pilots.

Furthermore, it has been proposed to provide a pilot assisted channel estimation for DFT-precoded OFDMA signals with interleaved subcarrier allocation. The pilot signal is generated as an IFDMA signal and multiplexed symbol-wise onto the data stream. In this way, the orthogonality between pilot symbols and data symbols as well as the low Peak-to-Average-Power-Ratio is maintained. On the other hand, the data stream is interrupted in time domain while channel estimation is performed. If this proposal is used for pilot multiplexing in case of a blockwise subcarrier allocation, e.g. B-IFDMA or LFDMA, the overhead for pilot transmission is out of scale as the possibility of interpolation is not taken into account.

In further proposals for pilot multiplexing for communication systems using multi-carrier modulation or frequency division multiplexing, it has been proposed to transmit pilot symbols with the help of a Time Division Multiplex component. The pilot symbols can be multiplexed across symbol or chip periods. However, the symbol-wise multiplexing leads to a higher Peak-to-Average-Power-Ratio. For the chip-wise multiplexing it is obvious that interference occurs between the chips ad that the pilots and data are not perfectly separable via this Time Division Multiplex component.

Moreover, it has been proposed to introduce a Code Division Multiplex component for pilot transmission. The pilots are multiplexed via orthogonal sequences across symbol or chip periods. Due to interference, the pilots and data sequences loose their orthogonality and are not perfectly separable. Furthermore, applying Code Division Multiplex for pilot transmission leads to an increasing Peak-to-Average-Power-Ratio, because the time domain signals of pilot symbols and data symbols have to be overlapped.

### 3. Summary of the Invention

In view of the above, the object of the invention is to provide a coding scheme for pilot multiplexing that avoids to interrupt the data stream in time domain and at the same time maintains a low Peak-to-Average-Power-Ratio and allows to estimate the channel transfer factors without performance degradation due to non-orthogonality between pilot and data symbols.

According to one aspect of the invention, it is proposed to provide a method for coding data to be transmitted in a transmitted signal, wherein the transmitted signal comprises multiple subcarriers with orthogonal frequencies, and wherein at least a subset of a number Q of subcarriers is assigned to a specific user. In particular, the method according to the invention comprises the steps of mapping data symbols relating to the specific user onto at least a part of the elements of a vector with a number of Q elements, applying a unitary transform to the vector with a number of Q elements and mapping the elements of the transform vector to the subcarriers assigned to a specific user. The number P of elements of said vector is smaller than or equal to Q.

It is proposed that in the above method for coding data, pilot symbols for performing a channel estimation are mapped onto a part of the elements of said vector with Q elements before applying said unitary transform to the vector with the number of Q elements.

Due the combined unitary transform of the pilot symbols and the data symbols, each data symbol and each pilot symbol is transmitted on each subcarrier that is allocated to the specific user under consideration. The pilot symbols are multiplexed within the stream of data symbols in time domain without necessitating an interruption of the data stream. By doing so, an interruption in data transmission while performing channel estimation may be avoided. The number of transmitted pilot symbols may be held the lowest possible, as the possibility of interpolation is fully exploited. Therefore, the overhead due to channel estimation may be kept as small as possible.

Further on, since the precoding using the unitary transform is applied on the screen contain both, data and pilot symbols, the Peak-to-Average-Power-Ratios maintained clearly lower as for the previously described multiplexing proposed as according to the prior art. Moreover, if interpolation in frequency domain is possible for at least two neighbouring subcarriers, the channel coefficients can be determined via a system of equations. By this means, the channel estimate is not affected by a performance loss due to missing separability of pilot and data symbols.

The simultaneous transmission of data symbols and pilot symbols can be achieved in particular if the unitary transform mixes the data symbols with the pilot symbols.

In a particularly simple embodiment of the method according to the invention, the unitary transform is a Discrete Fourier Transform.

Furthermore, it is proposed that the mapping of the elements of the transformed vector of the subcarriers assigned to the specific user is a block interleaved subcarrier allocation mapping. This leads to a particularly favourable Peak-to-Average-Power-Ratio and enables interpolations for channel estimations within the blocks.

If the number of pilot symbols mapped on said second part of the elements of said vector with Q elements is equal or only slightly higher than a deflection of Q : i, wherein i is the interpolation depth in frequency domain that is related to the coherence bandwidth of the channel, the pilot symbol overhead is reduced. According to the sampling theorem, the above number of pilot symbols allows a complete reconstruction of the transmitted signal and the system of equations being set up for determining the number of Q : i channel transfer coefficients is solvable.

According to a further aspect of the invention, it is proposed that the signal to be transmitted is generated by applying an Inverse Discrete Fourier Transform to an elementary vector representing the total number of subcarriers of the signal. The elements of the transform vector with Q elements are mapped on the elements of the N elementary vector corresponding to the subcarriers assigned to the specific user in the step of mapping the elements of the transformed vector. The transmitted signal in time domain is obtained by applying an Inverse Discrete Fourier Transform.

According to a further aspect of the invention, the invention proposes to provide a data coding device for coding data to be transmitted in a transmitted signal, wherein the transmitted signal comprises multiple subcarriers with orthogonal frequencies, and wherein at least a subset of a number Q of subcarriers is assigned to a specific user. It is proposed that the data coding device comprises a first mapping means, a transforming means and a second mapping means. The first mapping means is configured for mapping data symbols relating to the specific user onto at least a part of the elements of a vector with a number of Q elements. The transforming means is configured for applying a unitary transform to the vector with the number of Q elements and the second mapping means is configured for mapping the elements of the transformed vector onto the subcarriers assigned to the specific user.

In order to achieve a signal with low Peak-to-Average-Power-Ratio while avoiding interruptions of the data transmission due to channel estimations, it is proposed that said first mapping means is configured to map pilot symbols for performing a channel estimation onto a second part of the elements of said vector with Q elements before applying said non-redundant unitary transform to the vector with a number of Q elements. Due to this, the data symbols as well as the pilot symbols are coded over the entire subset of Q subcarriers allocated to the specific user and may be transmitted simultaneously.

According to further advantageous embodiments of the invention, it is proposed that the transforming means is configured to mix the data symbols with the pilot symbols, e.g. by using a Discrete Fourier Transform as a non-redundant unitary transform.

A favourable channel estimation within blocks of subcarriers may be performed if the second mapping means is configured to perform a block interleaved subcarrier allocation mapping.

The pilot signal can be reduced, if the first mapping means is configured to map a number of pilot symbols to said second part of the elements of the Q elementary vector, wherein said numbers equal to or higher than the fraction Q : i, wherein i is depth of interpolation in frequency domain, that is dependent on the coherence bandwidth of the channel.

Furthermore, it is proposed that the data coding device according to the invention further comprises a signal generating means being configured to generate the signal to be transmitted by applying an inverse Discrete Fourier Transform to an N elementary vector representing the total number of subcarriers of the transmitted signal, wherein said elements of the transformed vector are comprised in the elements of the N elementary vector corresponding to the subcarriers assigned to the specific user.

The invention further provides the radio transmitter comprising a data coding device of the above described type.

According to a further aspect of the invention, it is proposed to provide a radio signal receiver for receiving the signal coded by the above described method for coding data.

It is proposed that the radio signal receiver comprises a means for decoding said transmitted signal by estimating the channel transfer coefficients and data symbols with the help of the pilot symbols and the received signal.

Other objects, features and advantages of the invention will become apparent from the following description of one embodiment of the invention taken in conjunction with accompanying drawings.

### 4. Brief Description of the Drawings

- Fig. 1: shows a radio transmitter comprising a data coding device and the radio signal receiver for receiving a signal coded by said data coding device;
- Fig. 2: is a diagram representing a method for coding data according to the invention;
- Fig. 4: shows an example of an allocation scheme for a multiplex time domain signal; and

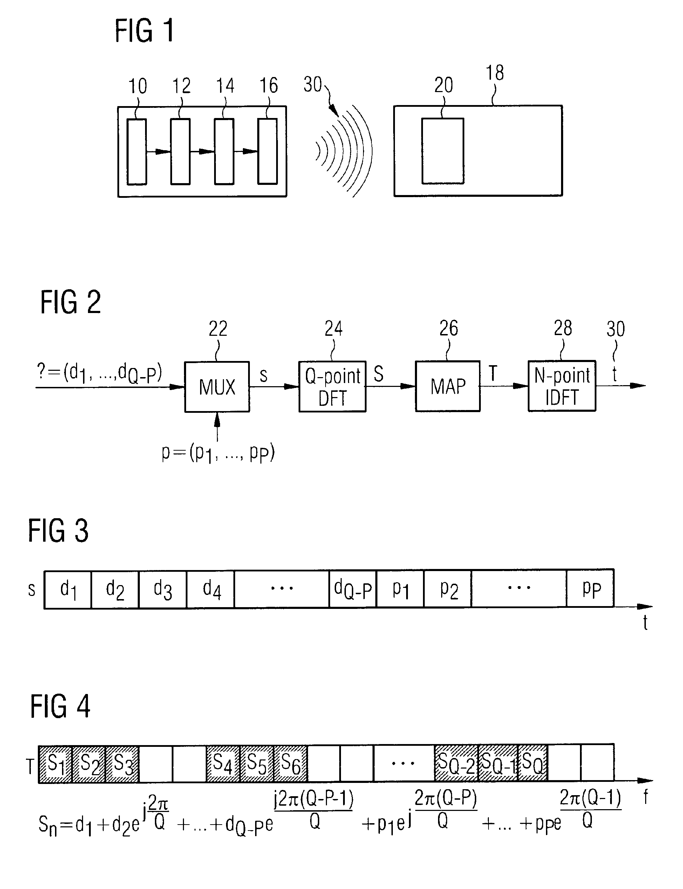

- Fig. 4: shows a Discrete Fourier Transform - Precoded Orthogonal Frequency Division Multiple Access Signal with block interleaved subcarrier allocation.

### 5. Detailed Description of an Embodiment

Fig. 1 shows a system comprising a radio transmitter and a radio signal receiver. The radio transmitter comprises a data coding device for coding data to be transmitted in a transmitted signal, wherein the transmitted signal comprises multiple subcarriers with orthogonal frequencies. The transmitted signal is a Multiple Access Signal, wherein different subsets of subcarriers are allocated to different users. In an alternative embodiment, the transmitted signal may code multiple streams of data, such that different subsets of subcarriers are allocated to different data streams.

The data coding device comprises a first mapping means for mapping data symbols relating to the specific user onto at least the first of the elements of a vector with Q elements. The resulting vector with Q elements is transformed by a transforming means of the data coding device. The transforming means applies a non-redundant unitary transform to the vector. In the present embodiment of the invention, the non-redundant unitary transform is a Discrete Fourier Transform. The skilled person will see that other suitable non-redundant unitary transforms resulting in a low Peak-to-Average-Power-Ratio could be applied alternatively.

Further, the data coding device comprises a second mapping means for mapping the elements of the transformed vector onto the subcarriers assigned to the specific user or to the specific data stream. The second mapping means is configured to perform a block interleaved subcarrier allocation mapping (cf. Fig. 4).

According to the invention, the first mapping means is configured to map the pilot symbols to be used for performing a channel estimation onto a second part of the elements of said vector before applying the non-redundant unitary transform to the vector with Q elements. If the non-redundant unitary transform has no non-trivial Eigenspaces, the transforming means will automatically mix the data symbols with the pilot symbols by applying the non-redundant unitary transform.

The number of the pilot symbols is equal to or only slightly higher than the fraction Q/i, wherein i is the depth of interpolation in frequency domain, that is dependent on the coherence bandwidth of the channel. Therefore, the amount of data stored in the pilot symbols is sufficient to perform satisfactory channel estimates in the radio signal receiver.

The data coding device further comprises a signal generating means being configured to generate the signal to be transmitted from one or more of the transformed vectors with Q elements. In order to do so, the signal generating means applies an inverse Discrete Fourier Transform to an N-elementary vector representing the total number of subcarriers of the transmitted signal. The elements of the transformed vector are comprised in the elements of the N-elementary vector according to the mapping applied by the second mapping means, wherein the elements being assigned to different users are block interleaved as shown in Fig. 4.

The radio receiver comprises a means for decoding said transmitted signal by extracting the contribution of the subcarriers assigned to the specific user from the transmitted signal and by storing the extracted symbols in a Q elementary vector. The means for decoding calculates the channel transfer factors and the data symbols with the help of the received signal and the pilot symbols.

Fig. 2 shows schematically a signal generation with multiplexed pilot symbols. The signal generation is performed by first replacing a number of P data symbols within the stream of Q data symbols by pilot symbols. The resulting Q elementary vector consists of Q - P data symbols and P pilot symbols.

Second, a unitary precoding, e.g. a Q-Point Discrete Fourier Transform is applied to the vector containing pilot symbols and data symbols. Each element of the resulting precoded vector consists of a super position of pilot symbols and data symbols. In a third step, the second mapping means applies a mapping according to the respective subcarrier allocation scheme to the multiplexed and precoded vector. In this step, the Q elements of the Q elementary vector are mapped onto a subset of the total number of N subcarriers in the transmitted signal. In a fourth step, the signal generating means applies an N-Point Inverse Discrete Fourier Transform (IDFT) to the multiplexed, precoded and mapped vector resulting in the transmitted time domain signal.

In frequency domain, each data symbol and each pilot symbol is transmitted in a superimposed way on each subcarrier that is allocated to the user under consideration. This superposition is due to the non-redundant unitary precoding applied in the second step to the multiplexed symbol vector. At the receiver, the number of Q equations is given by Q subcarriers carrying data and pilot symbols that are distributed by the channel and additive noise. Due to the cyclic structure in time domain, the channel influence on the information transmitted on each subcarrier can be described by the multiplication with a complex channel transfer factor, which has to be estimated using the pilot symbols. Within the coherence bandwidth, neighbouring subcarriers can be assumed to show the same channel behaviour.

If interpolation is possible, the number of different channel transfer coefficients may be chosen to be smaller than Q and dependent on the coherence bandwidth. Therefore, the information received on each of the Q subcarriers leads to a system of Q equations with Q - P data symbols and Q/i channel transfer coefficient as unknowns. The depths of interpolation i corresponds to the coherence bandwidth of the channel. If the coherence bandwidth is equal to two subcarriers, i = 2.

The total number of unknowns in the resulting system of equations is Q - P + Q/i. As long as P > Q/i, the system of equations can be solved and the channel vectors can be estimated.

In Fig. 2, an example for signal generation with multiplexed pilot symbols is given for the case of a Discrete Fourier Transform precoded Orthogonal Frequency Division Multiple Access with block interleaved subcarrier allocation. d denotes the vector Q - P data symbols and P denotes the vector of pilot symbols.

Fig. 3 shows an exemplary multiplexed time domain signal with blockwise allocated pilot and data symbols. The frequency representation of the block interleaved Frequency Division Multiple Access signal as given in Fig. 4, where pilots and data are transmitted on each subcarrier that is allocated to the user under consideration. The important point is that in the transmitted signal, pilot symbols and data symbols are mixed in a linear superposition generated by the non-redundant unitary transform.

The pilot symbols are multiplexed within the stream of data symbols in time domain. By doing so, pilot and data symbols can be transmitted at the same time, such that there is no interruption in data transmission while performing channel estimation.

The number of transmitted pilot symbols is the lowest possible, as the possibility of interpolation is fully exploited. Thus, the overhead due to channel estimation is held as small as possible.

Moreover, as the precoding supplied to the stream containing both, data and pilot symbols, the Peak-to-Average-Power-Ratio (PAPR) is maintained clearly lower as for the multiplexing proposal according to the prior art. Further, if interpolation in frequency domain is possible for at least two neighbouring subcarriers, the channel coefficient can be determined via a system of equations. By this means, the channel estimate is not affected by a performance loss due to missing separability of pilots and data.

## Claims

1. Method for coding data to be transmitted in a transmitted signal, wherein the transmitted signal comprises multiple subcarriers with orthogonal or quasi-orthogonal frequencies, and wherein at least a subset of a number Q of subcarriers is assigned to a specific user, said method comprising the steps of:
- mapping data symbols related to the specific user onto at least a part of the elements of a vector with a number of at the most Q elements,
- applying a unitary transform to the vector with the number of at most Q elements and
- mapping the elements of the transformed vector to the subcarriers assigned to the specific user,
**characterized in that** pilot symbols for performing a channel estimation are mapped to a part of the elements of said vector with at most Q elements before applying said a unitary transform to the vector with the number of at most Q elements.

2. Method according to claim 1, **characterized in that** the unitary transform mixes the data symbols with the pilot symbols.

3. Method according to claim 2, **characterized in that** the unitary transform is a non-redundant unitary transform

4. Method according to claim 3, **characterized in that** the non-redundant unitary transform is a Discrete Fourier Transform.

5. Method according to claim 2, **characterized in that** the unitary transform is a redundant unitary transform.

6. Method according to one of the preceding claims, **characterized in that** a subset of a number N of subcarriers is assigned to a specific user.

7. Method according to one of the preceding claims, **characterized in that** the mapping of the elements of the transformed vector to the subcarriers assigned to the specific user is a block-interleaved subcarrier allocation mapping.

8. Method according to one of the preceding claims, **characterized in that** the mapping of the elements of the transformed vector to the subcarriers assigned to the specific user is a localized subcarrier allocation mapping.

9. Method according to one of the preceding claims, **characterized in that** the number of pilot symbols being mapped to said part of the elements of said vector with at most Q elements is equal to or higher than the fraction Q/i, wherein i is the depth of interpolation in frequency domain that is related to the coherence bandwidth of the channel.

10. Method according to one of the preceding claims, **characterized in that** the signal to be transmitted is generated by applying an Inverse Discrete Fourier Transform to an N-elementary vector representing the total number of subcarriers of the signal, wherein elements of the transformed vector are mapped to elements of the N-elementary vector corresponding to the subcarriers assigned to the specific user.

11. Data coding device for coding data to be transmitted in a transmitted signal, wherein the transmitted signal comprises multiple subcarriers with orthogonal frequencies, and wherein at least a subset of a number Q of subcarriers is assigned to a specific user, said data coding device comprising:
- a first mapping means for mapping data symbols related to the specific user onto at least a part of the elements of a vector with a number of at most Q elements,
- a transforming means for applying a unitary transform to the vector with the number of at most Q elements and
- a second mapping means for mapping the elements of the transformed vector onto the subcarriers assigned to the specific user,
**characterized in that** said first mapping means is configured to map pilot symbols for performing a channel estimation onto a part of the elements of said vector with at most Q elements before applying said unitary transform to the vector with the number of at most Q elements.

12. Data coding device according to claim 11, **characterized in that** said transforming means is configured to mix the data symbols with the pilot symbols.

13. Data coding device according to claim 12, **characterized in that** the unitary transform is a non-redundant unitary transform.

14. Data coding device according to claim 13, **characterized in that** the non-redundant unitary transform is a Discrete Fourier Transform.

15. Data coding device according to claim 11 or 12, **characterized in that** the unitary transform is a redundant unitary transform.

16. Data coding device according to at least one of claims 11 - 15, **characterized in that** a set of a number N of subcarriers is assigned to a specific user.

17. Data coding device according to one of claims 11 - 16,
**characterized in that** said second mapping means is configured to perform a block-interleaved subcarrier allocation mapping.

18. Data coding device according to at least one of claims 11-16, **characterized in that** said second mapping means is configured to perform a localized subcarrier allocation mapping.

19. Data coding device according to at least one of claims 11 - 18, **characterized in that** said first mapping means is configured to map a number of pilot symbols to said part of the elements of said vector with at most Q elements, wherein said number is equal to or higher than the fraction Q/i, wherein i is the interpolation depth in frequency domain that is related to the coherence bandwidth of the channel.

20. Data coding device according to at least one of claims 11 - 19, **characterized by** further comprising a signal generating means being configured to generate the signal to be transmitted by applying an Inverse Discrete Fourier Transform to an N-elementary vector representing the total number of subcarriers from the signal, wherein said elements of the transformed vector are comprised in the elements of the N-elementary vector corresponding to the subcarriers assigned to the specific user.

21. Radio transmitter comprising a data coding device according to at least one of claims 11 - 20.

22. Radio signal receiver for receiving a signal coded by the method according to at least one of claims 1 - 10, **characterized by** comprising a means for estimating the channel transfer coefficient and the data symbols with the help of the pilot symbols and the received signal.

23. Radio signal receiver according to claim 22., **characterized in that** the means for estimating the channel transfer coefficients and the data symbols is configured to solve a system of Q equations in frequency domain.

24. Radio signal receiver according to claim 23, **characterized in that** the means for estimating the channel transfer coefficients and the data symbols is configured to solve a system of Q equations iteratively.

25. Radio signal receiver according to at least one of claims 22 - 24, **characterized in that** the means for estimating the channel transfer coefficients and the data symbols is configured to solve an optimization problem.
